# FASCICULE DE BREVET EUROPEEN

(11) **EP 3 256 377 B1**
(45) Date de publication et mention de la délivrance du brevet: **02.01.2019**
(21) Numéro de dépôt: 16705067.3
(22) Date de dépôt: 09.02.2016
(51) Int. Cl.: B62M 6/75

(54) **DISPOSITIF D'ASSISTANCE ÉLECTRIQUE POUR VÉLO ET VÉLO ÉQUIPÉ D'UN TEL DISPOSITIF**
ELEKTRISCHE UNTERSTÜTZUNGSVORRICHTUNG FÜR EIN FAHRRAD UND MIT SOLCH EINER VORRICHTUNG AUSGESTATTETES FAHRRAD
ELECTRIC ASSIST DEVICE FOR A BICYCLE AND BICYCLE EQUIPPED WITH SUCH A DEVICE

(30) Priorité: 11.02.2015 FR 1551113
(43) Date de publication de la demande: 20.12.2017
(73) Titulaire: Compagnie Générale des Etablissements Michelin, 63000 Clermont-Ferrand (FR)
(72) Inventeur: OLSOMMER, David, 63040 Clermont-Ferrand Cedex 09 (FR)
(74) Mandataire: Noel, Luminita
(86) Numéro de dépôt international: PCT/EP2016/052668
(87) Numéro de publication internationale: WO 2016/128369

(56) Documents cités:
- WO-A2-2010/134793
- FR-A1- 2 998 858
- US-A- 5 799 747

## Description

La présente invention concerne les dispositifs d'assistance électrique pour vélo et les vélos équipés de tels dispositifs.

Différents dispositifs d'assistance électrique pour vélo sont actuellement connus.

Il existe des dispositifs qui utilisent une machine électrique placée dans le moyeu de l'une des roues du vélo.

Il existe un dispositif, décrit dans le document DE-20314210-U1, dans lequel un pignon d'un moteur électrique engrène sur une denture intérieure de la jante de la roue avant du vélo.

Il existe par ailleurs un dispositif, décrit dans le document WO 2014/086728-A1, dans lequel un pignon d'un moteur électrique engrène sur une denture latérale d'un bandage d'une roue du vélo. Le document FR 2998858 A décrit un dispositif d'assistance électrique pour vélo selon le préambule de la revendication 1.

La présente invention a pour objet de proposer un dispositif d'assistance électrique perfectionné.

Selon un mode de réalisation, il est proposé un dispositif d'assistance électrique pour vélo, qui comprend :
une machine électrique muni d'un bras de support et comprenant un arbre de rotor qui porte un galet d'entraînement par l'intermédiaire d'une roue libre, le bras de support étant apte à être monté sur le vélo par l'intermédiaire d'un arbre de pivotement dont l'axe de pivotement est à distance de l'axe de l'arbre de rotor, de façon que le bras de support puisse pivoter dans un premier sens de pivotement pour placer le galet d'entraînement en contact avec une zone annulaire de la roue du vélo, dans une position d'entraînement, et pivoter dans un second sens de pivotement pour écarter le galet d'entraînement de cette zone annulaire de contact,
un moyen de rappel agissant sur ledit bras de support dans ledit premier sens de pivotement,
des moyens de positionnement actionnables pour maintenir de façon libérable le bras de support dans une position écartée du galet d'entraînement,
et des moyens de contrôle du fonctionnement de la machine électrique aptes à alimenter en énergie électrique la machine électrique pour produire un couple moteur dans le sens de l'entraînement de la roue du vélo en marche avant par l'intermédiaire de l'organe de roue libre et du galet d'entraînement, et aptes à délivrer une impulsion électrique à la machine électrique pour produire un couple de réaction dans un sens opposé audit couple moteur, provoquant un pivotement du bras de support dans ledit second sens de pivotement, assurant l'actionnement desdits moyens de positionnement.

Lesdits moyens de contrôle peuvent comprendre un capteur de la vitesse en marche avant du vélo et un moyen électronique pour délivrer l'impulsion de mise en rotation en sens inverse de l'arbre de rotor sélectivement en fonction du signal issu dudit capteur de vitesse.

Lesdits moyens de contrôle peuvent comprendre un capteur de rotation du pédalier du vélo et un moyen électronique pour délivrer l'impulsion de mise en rotation en sens inverse de l'arbre de rotor sélectivement en fonction du signal issu dudit capteur de rotation.

Lesdits moyens de contrôle peuvent comprendre un capteur de position du bras de support.

Lesdits moyens de contrôle peuvent comprendre une poignée de commande de l'alimentation de la machine électrique en marche avant.

Lesdits moyens de positionnement actionnables peuvent comprendre un tirant relié audit bras de support et muni d'un doigt d'accrochage, une butée de retenue, une première came pour guider le doigt d'accrochage lorsque le bras de support est pivoté dans ledit second sens de pivotement, jusqu'à ce que ce doigt d'accrochage vienne sur la butée de retenue, dans ladite position écartée du galet d'entraînement, et une seconde came pour guider le doigt d'accrochage lorsque le bras de support est pivoté dans ledit premier sens de pivotement afin de libérer le doigt d'accrochage par rapport à la butée de retenue.

Ledit galet d'entraînement peut comprendre une denture apte à être en prise, dans une position d'entraînement, avec une denture de ladite zone annulaire de contact de la roue du vélo.

Ladite zone annulaire de contact peut être aménagée sur un bandage de la roue du vélo.

Ladite machine électrique peut comprendre un rotor porté par ledit arbre de rotor et placé autour d'un stator.

Ladite machine électrique peut comprendre une enveloppe périphérique solidaire de l'arbre de rotor et portant le rotor.

Lesdits moyens de contrôle du fonctionnement de la machine électrique peuvent être aptes, lorsque ledit galet d'entraînement est à ladite position écartée, à délivrer ladite impulsion électrique produisant ledit couple de réaction après production dudit couple moteur.

Il est également proposé un vélo équipé d'un dispositif d'assistance électrique tel que celui exposé ci-dessus.

Un dispositif d'assistance électrique et un vélo équipé d'un tel dispositif vont maintenant être décrits à titre d'exemples non limitatifs, illustrés par le dessin sur lequel :
- la figure 1 représente une vue schématique partielle de côté d'un vélo équipé d'un dispositif d'assistance électrique ;
- la figure 2 représente une vue de côté du dispositif d'assistance électrique ;
- la figure 3 représente une coupe longitudinale d'une machine électrique du dispositif d'assistance électrique ;
- la figure 4 représente une vue de dessous du dispositif d'assistance électrique, dans une position d'entraînement ;
- la figure 5 représente une vue de dessous partielle agrandie du dispositif d'assistance électrique, dans sa position d'entraînement ;
- la figure 6 représente une vue de dessous du dispositif d'assistance électrique, dans une position écartée ;
- la figure 7 représente une vue de dessous partielle agrandie du dispositif d'assistance électrique, dans sa position écartée ; et

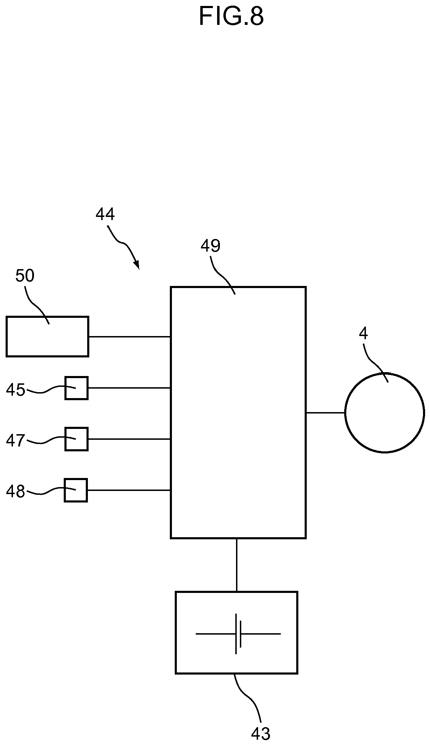

- la figure 8 représente un schéma électronique d'un boîtier électronique de contrôle du dispositif d'assistance électrique.

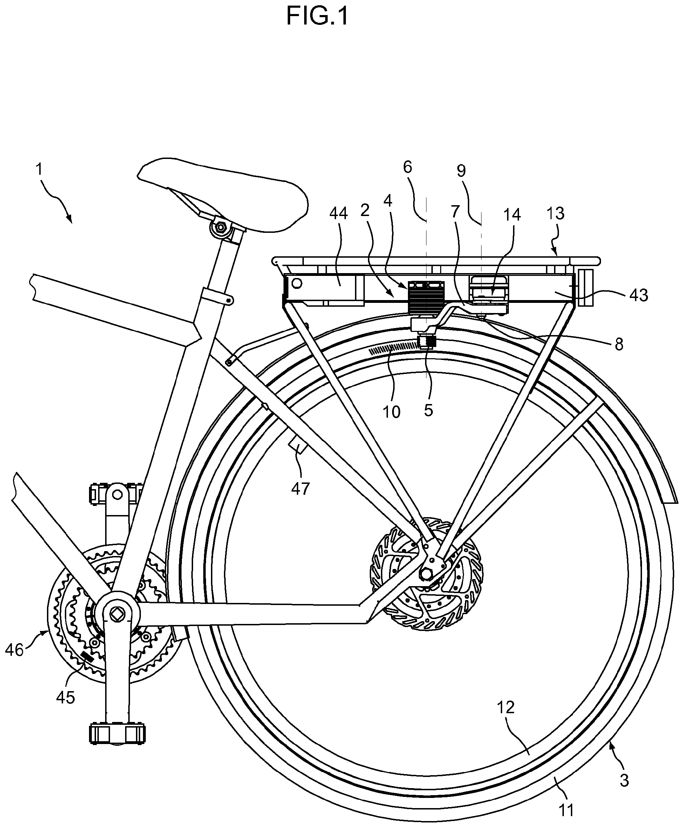

Sur la figure 1 est illustré un vélo 1 équipé d'un dispositif d'assistance électrique 2 qui est apte à générer une force motrice d'entraînement en rotation en marche avant d'une roue 3 du vélo, par exemple sa roue arrière, en vue d'assister le cycliste.

Le dispositif d'assistance électrique 2 comprend une machine électrique 4 qui comprend un galet d'entraînement 5, tournant selon un axe 6 de la machine 4, et qui est munie d'un bras latéral de support 7 qui est monté sur le vélo par l'intermédiaire d'un arbre de pivotement 8 dont l'axe de pivotement 9 est à distance de l'axe 6 de la machine électrique 4, de telle sorte que la machine électrique 4 est montée en porte-à-faux.

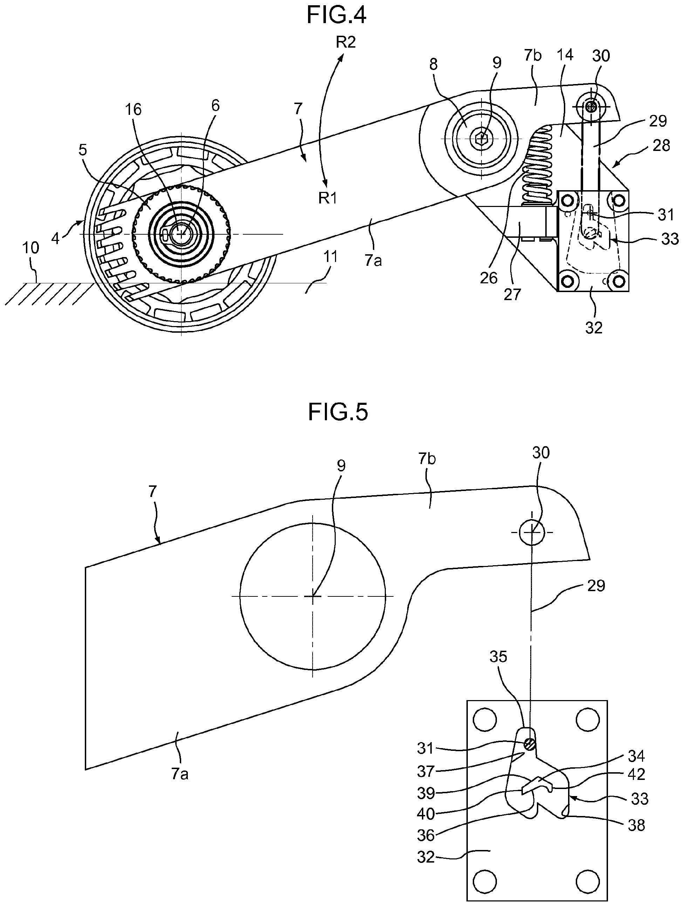

Les axes 6 et 9 sont placés l'un par rapport à l'autre de façon que le bras de support 7 puisse pivoter dans un premier sens de pivotement R1 (figure 4) pour placer le galet d'entraînement 5 en contact avec une zone annulaire 10 de la roue 3 du vélo, dans une position d'entraînement, et pivoter dans un second sens de pivotement R2 (figure 4) pour écarter le galet d'entraînement 5 de cette zone annulaire de contact 10.

Selon l'exemple représenté, la roue 3 du vélo comprend un bandage 11 monté sur une jante 12. La zone annulaire de contact 10 est prévue sur un flanc du bandage 11. Le galet d'entraînement 5 présente une denture périphérique et la zone annulaire de contact 10 présente une denture, ces dentures venant en prise dans ladite position d'entraînement. Selon une disposition particulière, l'axe 6 de la machine 4 s'étend substantiellement radialement à cette zone annulaire de contact 10. L'axe 6 de la machine 4 et l'axe 9 de l'arbre de pivotement 8 sont substantiellement parallèles pour que le galet d'entraînement 5 pivote dans un plan substantiellement parallèle à l'axe de la zone annulaire de contact 10. Néanmoins, l'axe 6 de la machine 4 pourrait être incliné par rapport à la zone annulaire de contact 10 et l'axe 6 de la machine 4 et l'axe 9 de l'arbre de pivotement 8 pourraient être inclinés l'un par rapport à l'autre pour que le galet d'entraînement 5 pivote dans un plan incliné par rapport à l'axe de la zone annulaire de contact 10.

Selon l'exemple de réalisation particulier représenté, le dispositif d'assistance électrique 2 est situé au-dessous d'une partie latérale d'un porte-bagages arrière 13, s'étendant au-dessus de la roue arrière 3 du vélo, l'arbre de pivotement 8 est monté sur une plaque fixe de support 14 fixée au-dessous du porte-bagages arrière 13, une portion du bras de support 7 s'étendant au-dessous de cette plaque 14. L'arbre de pivotement 8 est placé substantiellement verticalement, de telle sorte que le bras de support 7 peut pivoter substantiellement horizontalement.

Selon l'exemple représenté, le dispositif d'assistance électrique 2 est placé à gauche de la roue 3 et la machine électrique 4 est placée en avant de l'arbre de pivotement 8.

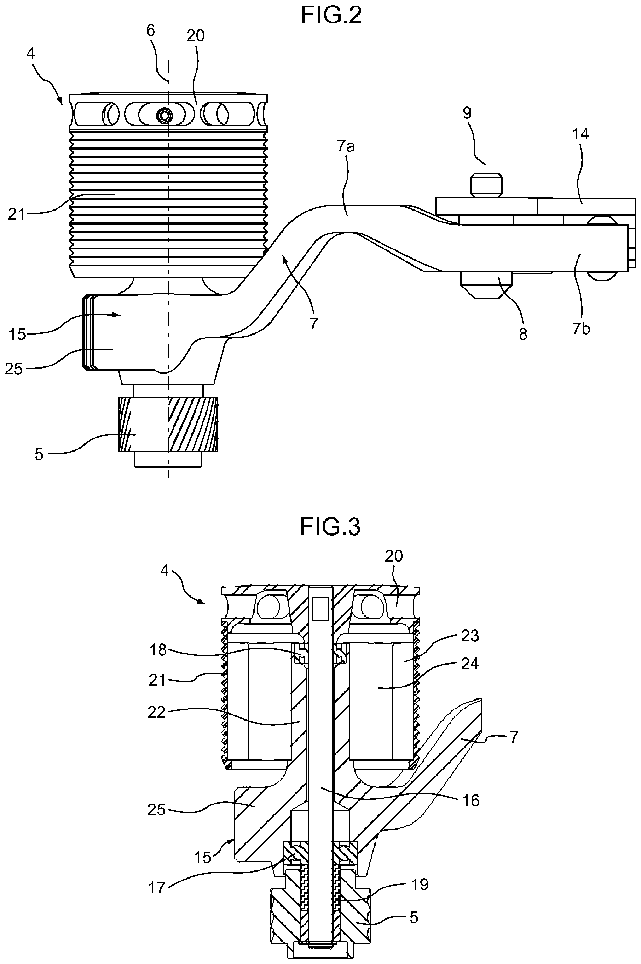

Comme illustré en particulier sur les figures 2 et 3, la machine électrique 4 comprend un support 15, par exemple formé d'une seule pièce avec le bras de support 7, qui porte un arbre de rotor 16 par exemple par l'intermédiaire de deux roulements 17 et 18 espacés axialement. Le galet d'entraînement 5 est monté sur une extrémité inférieure en porte-à-faux de l'arbre de rotor 16 par l'intermédiaire d'une roue libre 19. Cette roue libre 19 est agencée de façon que la machine électrique 4, alimentée en énergie électrique, puisse produire un couple moteur et faire tourner l'arbre de rotor 16 dans un sens de rotation et transmette son mouvement de rotation au galet d'entraînement 5, dans le sens de l'entraînement en rotation de la roue 3 du vélo en marche avant, en particulier lorsque le galet d'entraînement 5 est en prise avec la zone annulaire 10 de la roue 3.

Selon la variante de réalisation illustrée, l'arbre de rotor 16 traverse le support 15 et est muni sur son extrémité supérieure d'un plateau radial 20 équipé d'une enveloppe cylindrique 21 s'étendant à distance radiale d'un noyau supérieur 22 du support 15. Cette enveloppe cylindrique 21 est munie, intérieurement, d'un rotor 23 et le noyau 22 est muni, extérieurement, d'un stator 24. La machine électrique 4 est donc à cage extérieure tournante, le bras de support 7 s'étendant latéralement à partir d'une partie inférieure 25 du support 15 prolongée vers le haut par le noyau supérieur 22, en passant au-dessous de l'extrémité inférieure de l'enveloppe cylindrique 21.

En se reportant aux figures 4 à 7, on va maintenant décrire des moyens permettant le positionnement en rotation du bras de support 7.

Le bras de support 7 comprend une portion 7a qui s'étend entre l'arbre de pivotement 8 et le support 15 de la machine électrique 4 et comprend une portion 7b qui prolonge cette portion 7a au-delà de l'arbre de pivotement 8.

Un ressort de rappel 26 est interposé horizontalement entre la portion 7b du bras de support 7 et une partie en saillie 27 de la plaque fixe de support 14 et agit sur le bras de support 7 dans le premier sens de pivotement R1.

Le dispositif d'assistance électrique 2 comprend des moyens de positionnement actionnables 28 pour déterminer des positions angulaires du bras de support 7, plus précisément pour maintenir de façon libérable le bras de support 7 dans une position angulaire de retenue correspondant à la position écartée précitée du galet d'entraînement 5 et pour que le bras de support atteigne une position angulaire de libération correspondant à la position d'entraînement précitée du galet d'entraînement 5.

Les moyens de positionnement 28 sont actionnables sous l'effet d'une impulsion électrique, délivrée à la machine électrique 4, pour produire un couple de réaction entre le stator 24 et le rotor 23, dans un sens opposé audit couple moteur. Ce couple de réaction est rendu possible grâce à l'existence de la roue libre 19. Ce couple de réaction provoque un pivotement du bras de support 7 dans le sens de pivotement R2 à l'encontre du ressort de rappel 26, de telle sorte que le bras de support 7 puisse passer de sa position angulaire de maintien à sa position angulaire de libération, et réciproquement de sa position angulaire de libération à sa position angulaire de maintien.

Selon une variante de réalisation, les moyens de positionnement 28 comprennent un tirant allongé 29 situé dans un plan perpendiculaire à l'arbre de pivotement 8, dont une extrémité est montée de façon articulée sur l'extrémité de la portion 7b du bras de support 7 par un axe 30 et qui porte au voisinage de son autre extrémité un doigt vertical d'accrochage 31 en saillie.

Les moyens de positionnement 28 comprennent une plaque de guidage 32 fixée perpendiculairement à l'arbre de pivotement 8 au-dessous de la plaque fixe de support 14.

La plaque de guidage 32 présente une ouverture 33 grossièrement en forme de coeur et aménage une butée de retenue 34 située à l'intérieur de cette ouverture 33 et à distance des flancs de cette dernière. Le doigt d'accrochage 31 du tirant 29 est engagé dans l'ouverture de guidage 33 et peut se déplacer dans l'espace entourant la butée de retenue 34.

Comme illustré sur les figures 4 et 5, dans la position d'entraînement précité, le doigt d'accrochage 31 est situé dans le voisinage de l'extrémité pointue 35 de l'ouverture 33, dans une position libre. Dans cette position d'entraînement, la position angulaire de libération correspondante du bras de support 7 est déterminée par l'appui du galet d'entraînement 5 sur la zone annulaire de contact 10 de la roue 3, sous l'effet du ressort de rappel 26. Le doigt d'accrochage 31 étant libre dans le sens du pivotement du bras de support 7, le ressort de rappel 26 détermine la force de contact du galet d'entraînement 5 sur la zone annulaire de contact 10 de la roue 3 du vélo.

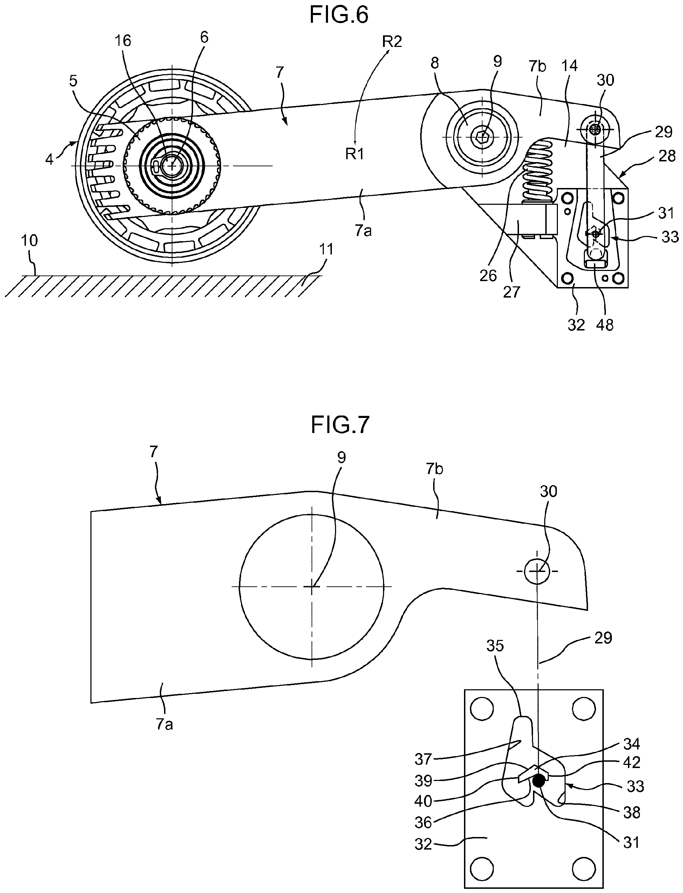

Comme illustré sur les figures 6 et 7, dans une position écartée déterminée, le doigt d'accrochage 31 est accroché sur une face en creux 36 de la butée de retenue 34, opposée à l'axe 30, et est maintenu dans cette position accrochée de retenue sous l'effet du ressort 26, maintenant ainsi le bras de support 7 dans une position angulaire dans laquelle le galet d'entraînement 5 est maintenu dans une position écartée de la zone annulaire d'entraînement 10 de la roue 3 du vélo.

Un côté de l'ouverture 33 détermine une première came de guidage 37 et l'autre côté détermine une seconde came de guidage 38. La butée de retenue 34 détermine une came de guidage 39 opposée à sa face en creux 36.

La première came de guidage 37 et la came de guidage 39 servent à guider le doigt d'accrochage 31 de façon que, sous l'effet d'une impulsion électrique appliquée à la machine électrique 4, ce doigt d'accrochage 31 contourne, à l'encontre du ressort de rappel 26, une extrémité latérale 40 de la butée de retenue 34 lors de son mouvement d'aller depuis sa position libre précitée (figures 4 et 5), puis, sous l'effet du ressort de rappel 26 et dans un mouvement de retour, vienne se placer en appui sur la face en creux 36 de la butée de retenue 34, dans sa position accrochée précitée (figures 5 et 6). Ce faisant, le galet d'entraînement 5 passe de sa position d'entraînement (figure 4) à sa position écartée (figure 6).

La seconde came de guidage 37 sert à guider le doigt d'accrochage 31 de façon que, sous l'effet d'une impulsion électrique appliquée à la machine électrique 4, ce doigt d'accrochage 31 s'écarte de la face en creux 36 de la butée de retenue 34, à l'encontre du ressort de rappel et dans un mouvement d'aller depuis sa position accrochée (figure 6 et 7), puis contourne, sous l'effet du ressort de rappel 26 et dans un mouvement de retour, l'autre extrémité latérale 42 de la butée de retenue 34 pour venir se placer sur la face en creux 36 de la butée de retenue 34, dans sa position de libération précitée (figures 4 et 5). Ce faisant, le galet d'entraînement 5 passe de sa position écartée (figure 6) à sa position d'entraînement (figure 4).

Comme illustré sur la figure 1, le vélo est équipé d'une batterie électrique 43 et d'un boîtier électronique 44 de contrôle de l'alimentation en énergie électrique de la machine électrique 4, par exemple fixés au-dessous du porte-bagages 13. Un capteur de rotation en marche avant 45 est prévu pour détecter la rotation du pédalier 46 du vélo. Un capteur de vitesse 47 est en outre prévu pour détecter la vitesse de déplacement en marche avant du vélo.

Par ailleurs, comme illustré sur la figure 6, un capteur de position 48 est prévu pour détecter les positions extrêmes par exemple du tirant 29, correspondant aux positions d'entraînement et écartée du galet d'entraînement 5.

Comme illustré sur la figure 7, le boîtier électronique 44 comprend un circuit électronique 49 de contrôle de l'alimentation en énergie électrique de la machine électrique 4. Ce circuit électronique 49 reçoit le signal issu du capteur de rotation 45, le signal issu du capteur de vitesse 47, le signal issu du capteur de position 48 et le signal issu d'une poignée 50 (non représentée sur la figure 1) de commande d'accélération ou de décélération manoeuvrable par le cycliste. Le circuit électronique 49 est relié à la batterie 3 et à la machine électrique 4.

Le circuit électronique 49 peut être programmé pour fonctionner notamment de la manière suivante, selon les signaux issus desdits capteurs.

Dans une situation initiale, le pédalier 46 est à l'arrêt et le galet d'entraînement 5 est dans sa position écartée de la zone annulaire 10 de contact de la roue 3 du vélo.

Le pédalier 46 tournant, le circuit électronique 49 envoie une impulsion électrique à la machine électrique 4 pour provoquer un mouvement en sens inverse de l'arbre de rotor 16 et provoquer, comme décrit précédemment, le passage du galet d'entraînement 5 de sa position écartée à sa position d'entraînement. La durée d'une telle impulsion électrique peut être de l'ordre de un dixième de seconde.

Tant que la vitesse du vélo est inférieure par exemple à huit kilomètres par heure, le galet d'entraînement 5 est maintenu à sa position d'entraînement.

Quand la vitesse du vélo est comprise entre ces huit kilomètres par heure et par exemple vingt-cinq kilomètres par heure, le circuit électronique 49 envoie, d'une part, une impulsion électrique à la machine électrique 4 pour produire le couple de réaction précité et provoquer, comme décrit précédemment, le passage du galet d'entraînement 5 de sa position d'entraînement à sa position écartée si le pédalier 46 est mis à l'arrêt et, d'autre part, une impulsion électrique à la machine électrique 4 pour produire le couple de réaction et provoquer, comme décrit précédemment, le passage du galet d'entraînement 5 de sa position écartée à sa position d'entraînement si le pédalier 46 est mis en rotation en marche avant.

Selon une variante de réalisation et sous le contrôle desdits capteurs, lorsque le galet d'entraînement 5 est dans sa position écartée, si le pédalier 46 est mis en rotation en marche avant, la machine électrique 4 est alimentée pour produire, dans une première phase, un couple moteur permettant d'amener le galet d'entraînement 5 à une vitesse correspondant sensiblement à la vitesse de la zone annulaire de contact. Puis, dans une seconde phase, l'impulsion électrique est délivrée à la machine électrique 4 pour produire le couple de réaction et provoquer, comme décrit précédemment, le passage du galet d'entraînement 5 de sa position écartée à sa position d'entraînement. Ensuite, un couple moteur est à nouveau appliquer. De la sorte, on évite les chocs, les bruits et l'usure qui pourraient résulter d'une mise en rotation brutale du galet d'entraînement 5 initialement à l'arrêt lors de sa mise en contact avec la zone de contact 10 du pneu.

Grâce à la poignée 50, quand le galet d'entraînement 5 est dans sa position d'entraînement, le cycliste peut commander le circuit électronique 49 de telle sorte que ce dernier alimente la machine électrique 4 de façon à faire tourner l'arbre de rotor 16 dans le sens de la marche avant dans le but de délivrer une force motrice d'assistance à la roue 3 du vélo.

La présente invention ne se limite pas aux exemples ci-dessus décrits.

La zone annulaire de contact 10 de la roue 3 pourrait être aménagée par exemple sur la jante 12.

La machine électrique 4 pourrait être placée à un autre endroit de la périphérie de la roue 3 et le dispositif d'assistance 2 pourrait être monté sur le cadre du vélo.

Les moyens de positionnement 28 pourraient présenter une structure différente et pourraient comprendre, pour assurer les deux positions du bras de support 7, un organe basculeur de butée, un organe à ressort de butée ou un organe rotatif de butée.

Le dispositif d'assistance électrique 2 pourrait être prévu pour entraîner la roue avant du vélo.

Le circuit électronique 49 pourrait être programmé selon une loi de commande différente de celle décrite.

La machine électrique 4 pourrait comprendre un rotor placé à l'intérieur d'un stator.

Le bras de support 7 pourrait être relié à un carter de la machine électrique 4.

La présente invention ne se limite pas aux exemples ci-dessus décrits. Bien des variantes de réalisation sont possibles sans sortir du cadre de l'invention.

## Revendications

1. Dispositif d'assistance électrique pour vélo, comprenant
une machine électrique (4) muni d'un bras de support (7) et comprenant un arbre de rotor (16) qui porte un galet d'entraînement (5) par l'intermédiaire d'une roue libre (19), le bras de support étant apte à être monté sur le vélo par l'intermédiaire d'un arbre de pivotement dont l'axe de pivotement est à distance de l'axe de l'arbre de rotor, de façon que le bras de support puisse pivoter dans un premier sens de pivotement pour placer le galet d'entraînement en contact avec une zone annulaire (10) de la roue du vélo, dans une position d'entraînement, et pivoter dans un second sens de pivotement pour écarter le galet d'entraînement de cette zone annulaire de contact,
un moyen de rappel (26) agissant sur ledit bras de support dans ledit premier sens de pivotement,
des moyens de positionnement actionnables (28) pour maintenir de façon libérable le bras de support dans une position écartée du galet d'entraînement, et **caractérisé par** des moyens de contrôle (44) du fonctionnement de la machine électrique aptes à alimenter en énergie électrique la machine électrique pour produire un couple moteur dans le sens de l'entraînement de la roue du vélo en marche avant par l'intermédiaire de l'organe de roue libre et du galet d'entraînement, et aptes à délivrer une impulsion électrique à la machine électrique pour produire un couple de réaction dans un sens opposé audit couple moteur, provoquant un pivotement du bras de support dans ledit second sens de pivotement, assurant l'actionnement desdits moyens de positionnement.

2. Dispositif selon la revendication 1, dans lequel les moyens de contrôle comprennent un capteur (47) de la vitesse en marche avant du vélo et un moyen électronique pour délivrer l'impulsion de mise en rotation en sens inverse de l'arbre de rotor sélectivement en fonction du signal issu dudit capteur de vitesse.

3. Dispositif selon l'une des revendications 1 et 2, dans lequel les moyens de contrôle comprennent un capteur (45) de rotation du pédalier du vélo et un moyen électronique pour délivrer l'impulsion de mise en rotation en sens inverse de l'arbre de rotor sélectivement en fonction du signal issu dudit capteur de rotation.

4. Dispositif selon l'une quelconque des revendications précédentes, dans lequel les moyens de contrôle comprennent un capteur (48) de position du bras de support.

5. Dispositif selon l'une quelconque des revendications précédentes, dans lequel les moyens de contrôle comprennent une poignée (50) de commande de l'alimentation de la machine électrique en marche avant.

6. Dispositif selon l'une quelconque des revendications précédentes, dans lequel les moyens de positionnement actionnables comprennent :
un tirant (29) relié audit bras de support et muni d'un doigt d'accrochage (31),
une butée de retenue (34),
une première came (37) pour guider le doigt d'accrochage lorsque le bras de support est pivoté dans ledit second sens de pivotement, jusqu'à ce que ce doigt d'accrochage vienne sur la butée de retenue, dans ladite position écartée du galet d'entraînement,
et une seconde came (38) pour guider le doigt d'accrochage lorsque le bras de support est pivoté dans ledit premier sens de pivotement afin de libérer le doigt d'accrochage par rapport à la butée de retenue.

7. Dispositif selon l'une quelconque des revendications précédentes, dans lequel le galet d'entraînement (5) comprend une denture apte à être en prise, dans une position d'entraînement, avec une denture de ladite zone annulaire de contact (10) de la roue du vélo.

8. Dispositif selon l'une quelconque des revendications précédentes, dans lequel la zone annulaire de contact (10) est aménagée sur un bandage de la roue du vélo.

9. Dispositif selon l'une quelconque des revendications précédentes, dans lequel la machine électrique comprend un rotor (23) porté par ledit arbre de rotor et placé autour d'un stator (21).

10. Dispositif selon la revendication 9, dans lequel la machine électrique comprend une enveloppe périphérique solidaire de l'arbre de rotor et portant le rotor.

11. Dispositif selon l'une quelconque des revendications précédentes, dans lequel les moyens de contrôle (44) du fonctionnement de la machine électrique sont aptes, lorsque ledit galet d'entraînement est à ladite position écartée, à délivrer ladite impulsion électrique produisant ledit couple de réaction après production dudit couple moteur.

12. Vélo équipé d'un dispositif d'assistance électrique selon l'une quelconque des revendications précédentes.

## Patentansprüche

1. Elektrische Unterstützungsvorrichtung für ein Fahrrad, welche umfasst:
eine elektrische Maschine (4), die mit einem Stützarm (7) versehen ist und eine Rotorwelle (16) umfasst, welche über ein Freilaufrad (19) eine Antriebsrolle (5) trägt, wobei der Stützarm geeignet ist, am Fahrrad über eine Schwenkwelle angebracht zu werden, deren Schwenkachse von der Achse der Rotorwelle beabstandet ist, so dass der Stützarm in einer ersten Schwenkrichtung schwenken kann, um die Antriebsrolle in einer Antriebsposition in Kontakt mit einem ringförmigen Bereich (10) des Rades des Fahrrads zu bringen, und in einer zweiten Schwenkrichtung schwenken kann, um die Antriebsrolle von diesem ringförmigen Kontaktbereich zu entfernen,
ein Rückholmittel (26), das in der ersten Schwenkrichtung auf den Stützarm wirkt,
betätigbare Positioniermittel (28), um den Stützarm lösbar in einer beabstandeten Position der Antriebsrolle zu halten, und **gekennzeichnet durch**
Mittel zur Überwachung (44) des Betriebs der elektrischen Maschine, die geeignet sind, die elektrische Maschine mit elektrischer Energie zu versorgen, um ein Antriebsdrehmoment in der Richtung des Antriebs des Rades des Fahrrads bei Vorwärtsfahrt über das Freilauforgan und die Antriebsrolle zu erzeugen, und geeignet sind, der elektrischen Maschine einen elektrischen Impuls zu liefern, um ein Reaktionsdrehmoment in einer zu dem Antriebsdrehmoment entgegengesetzten Richtung zu erzeugen, das ein Schwenken des Stützarms in der zweiten Schwenkrichtung hervorruft, welches die Betätigung der Positioniermittel sicherstellt.

2. Vorrichtung nach Anspruch 1, wobei die Überwachungsmittel einen Sensor (47) der Geschwindigkeit des Fahrrads bei Vorwärtsfahrt und ein elektronisches Mittel, um in Abhängigkeit von dem von diesem Geschwindigkeitssensor abgegebenen Signal selektiv den Impuls zum Rotieren der Rotorwelle in umgekehrter Richtung zu liefern, umfassen.

3. Vorrichtung nach einem der Ansprüche 1 und 2, wobei die Überwachungsmittel einen Sensor (45) der Rotation des Tretlagers des Fahrrads und ein elektronisches Mittel, um in Abhängigkeit von dem von diesem Rotationssensor abgegebenen Signal selektiv den Impuls zum Rotieren der Rotorwelle in umgekehrter Richtung zu liefern, umfassen.

4. Vorrichtung nach einem der vorhergehenden Ansprüche, wobei die Überwachungsmittel einen Positionssensor (48) für den Stützarm umfassen.

5. Vorrichtung nach einem der vorhergehenden Ansprüche, wobei die Überwachungsmittel einen Griff (50) zur Steuerung der Stromversorgung der elektrischen Maschine bei Vorwärtsfahrt umfassen.

6. Vorrichtung nach einem der vorhergehenden Ansprüche, wobei die betätigbaren Positioniermittel umfassen:
eine Zugstange (29), die mit dem Stützarm verbunden ist und mit einem Verhakungsfinger (31) versehen ist,
einen Rückhalteanschlag (34),
einen ersten Nocken (37) zum Führen des Verhakungsfingers, wenn der Stützarm in der zweiten Schwenkrichtung geschwenkt wird, bis dieser Verhakungsfinger in der beabstandeten Position der Antriebsrolle am Rückhalteanschlag zur Anlage kommt,
und einen zweiten Nocken (38) zum Führen des Verhakungsfingers, wenn der Stützarm in der ersten Schwenkrichtung geschwenkt wird, um den Verhakungsfinger in Bezug auf den Rückhalteanschlag zu lösen.

7. Vorrichtung nach einem der vorhergehenden Ansprüche, wobei die Antriebsrolle (5) eine Zahnung umfasst, die geeignet ist, in einer Antriebsposition mit einer Zahnung des ringförmigen Kontaktbereichs (10) des Rades des Fahrrads in Eingriff zu stehen.

8. Vorrichtung nach einem der vorhergehenden Ansprüche, wobei der ringförmige Kontaktbereich (10) auf einem Reifen des Rades des Fahrrads angeordnet ist.

9. Vorrichtung nach einem der vorhergehenden Ansprüche, wobei die elektrische Maschine einen Rotor (23) umfasst, der von der Rotorwelle getragen wird und um einen Stator (21) herum angeordnet ist.

10. Vorrichtung nach Anspruch 9, wobei die elektrische Maschine eine Umfangshülle umfasst, die mit der Rotorwelle fest verbunden ist und den Rotor trägt.

11. Vorrichtung nach einem der vorhergehenden Ansprüche, wobei die Mittel zur Überwachung (44) des Betriebs der elektrischen Maschine geeignet sind, wenn sich die Antriebsrolle in der beabstandeten Position befindet, nach Erzeugung des Antriebsdrehmoments den elektrischen Impuls zu liefern, der das Reaktionsdrehmoment erzeugt.

12. Fahrrad, welches mit einer elektrischen Unterstützungsvorrichtung nach einem der vorhergehenden Ansprüche ausgestattet ist.

## Claims

1. Electrical assistance device for a bicycle, comprising
an electrical machine (4) provided with a support arm (7) and comprising a rotor shaft (16) that carries a drive roller (5) by means of a free wheel (19), the support arm being mountable on the bicycle by means of a pivot shaft, the pivot axis of which is at a distance from the axis of the rotor shaft, so that the support arm can pivot in a first pivoting direction in order to place the drive roller in contact with an annular region (10) of the wheel of the bicycle, in a driving position, and can pivot in a second pivoting direction in order to separate the drive roller from this annular contact region,
a restoring means (26) acting on the said support arm in the said first pivoting direction,
actuable positioning means (28) for holding the support arm releasably in a separated position of the drive roller, and **characterised by**
means (44) for controlling the operation of the electrical machine, which are capable of supplying the electrical machine with electrical energy in order to produce a motive torque in the direction of the wheel of the bicycle being driven in forward movement by means of the free-wheel member and the drive roller, and are capable of delivering an electrical pulse to the electrical machine in order to produce a reaction torque in a direction opposite to the said motive torque, causing the support arm to pivot in the said second pivoting direction, causing actuation of the said positioning means.

2. Device according to Claim 1, wherein the control means comprise a sensor (47) of the forward-movement speed of the bicycle and an electronic means for delivering the pulse for setting the rotor shaft in rotation in the reverse direction selectively as a function of the signal emitted by the said speed sensor.

3. Device according to one of Claims 1 and 2, wherein the control means comprise a sensor (45) of rotation of the pedals of the bicycle and an electronic means for delivering the pulse for setting the rotor shaft in rotation in the reverse direction selectively as a function of the signal emitted by the said rotation sensor.

4. Device according to any one of the preceding claims, wherein the control means comprise a sensor (48) of the position of the support arm.

5. Device according to any one of the preceding claims, wherein the control means comprise a control handle (50) for the supply of the electrical machine in forward movement.

6. Device according to any one of the preceding claims, wherein the actuable positioning means comprise:
a link rod (29) connected to the said support arm and provided with an interlock finger (31),
a retaining stop (34),
a first cam (37) for guiding the interlock finger when the support arm is pivoted in the said second pivoting direction, until this interlock finger reaches the retaining stop, in the said separated position of the drive roller,
and a second cam (38) for guiding the interlock finger when the support arm is pivoted in the said first pivoting direction, in order to release the interlock finger from the retaining stop.

7. Device according to any one of the preceding claims, wherein the drive roller (5) comprises teeth capable of engaging, in a drive position, with teeth of the said annular contact region (10) of the wheel of the bicycle.

8. Device according to any one of the preceding claims, wherein the annular contact region (10) is arranged on a tyre of the wheel of the bicycle.

9. Device according to any one of the preceding claims, wherein the electrical machine comprises a rotor (23) carried by the said rotor shaft and placed around a stator (21).

10. Device according to Claim 9, wherein the electrical machine comprises a peripheral casing secured to the rotor shaft and carrying the rotor.

11. Device according to any one of the preceding claims, wherein the means (44) for controlling the operation of the electrical machine are capable, when the said drive roller is in the said separated position, of delivering the said electrical pulse producing the said reaction torque after production of the said motive torque.

12. Bicycle equipped with an electrical assistance device according to any one of the preceding claims.
